# EUROPEAN PATENT APPLICATION

(11) **EP 4 831 609 A1**
(43) Date of publication of application: **28.10.2026**
(21) Application number: 24907081.4
(22) Date of filing: 25.11.2024
(51) Int. Cl.: G01N 15/0227

(54) **OPTICAL MEASUREMENT METHOD AND OPTICAL MEASUREMENT DEVICE**

(30) Priority: 19.12.2023 JP 2023213997
(71) Applicant: FUJIFILM Corporation, Tokyo 106-8620 (JP)
(72) Inventor: NAKAMURA Sohichiro, Ashigarakami-gun, Kanagawa 258-8577 (JP); HAMADA Kenichi, Ashigarakami-gun, Kanagawa 258-8577 (JP)
(74) Representative: HGF
(86) International application number: PCT/JP2024/041583
(87) International publication number: WO 2025/134693

(57) **Abstract**

Provided are an optical measurement method and an optical measurement device that accurately measure a particle diameter and a particle size distribution of particles contained in a dispersion liquid containing the particles. An optical measurement method of a dispersion liquid containing particles, the method including: an acquisition step of acquiring a plurality of images of the particles obtained by causing incident light to be incident on the dispersion liquid with a changed intensity, continuously in time for each intensity of the incident light; a measurement step of measuring a moving average distance of the particles for each intensity of the incident light, from the plurality of images acquired continuously in time for each intensity of the incident light, the plurality of images being obtained in the acquisition step; and a calculation step of calculating an apparent particle diameter of the particles for each intensity of the incident light, from the moving average distance of the particles for each intensity of the incident light obtained in the measurement step, to obtain a true particle diameter of the particles from the apparent particle diameter of the particles for each intensity of the incident light.

## Description

### BACKGROUND OF THE INVENTION

### 1. Field of the Invention

The present invention relates to an optical measurement method for a dispersion liquid containing particles and an optical measurement device.

### 2. Description of the Related Art

In various fields such as industry, environment, medicine, and academia, it is important and necessary to quantitatively measure a size of nanoparticles of about 1 to 100 nm in a liquid with high accuracy.
Examples of the representative method for the quantification of the nanoparticles include a dynamic light scattering method, a low-coherence dynamic light scattering method, a particle tracking analyzer that measures a displacement of particles under a microscope, and a multi-modal light scattering measurement method that combines a Mie scattering angle profile and dynamic light scattering information. By using these methods, a diffusion coefficient of the particles is measured, and the diffusion coefficient is converted into a particle diameter. Currently, a more specific particle measurement method has been proposed.

JP2005-164560A proposes a method of obtaining a moving distance of fine particles between captured images captured at different time points from a dark-field image (video) using an annular optical system and obtaining a particle diameter of the fine particles by calculation using an average moving distance, a diffusion time, and an Einstein-Stokes relationship (see the following expression (A)).$\sqrt{\overline{{x}^{2}}} = \sqrt{\frac{2 kT}{3 πμd} Δ t}$ (A)
T : Absolute temperature of liquid
π : Circular constant
K : Boltzmann constant
*µ* : Viscosity coefficient of liquid
$\sqrt{\overline{{x}^{2}}}$ : Average displacement distance of fine particles due to Brownian motion
A t : Measurement time
d : Diameter of fine particles

### SUMMARY OF THE INVENTION

JP2005-164560A describes that the particle diameter and the particle size distribution of the fine particles are obtained using the average moving distance, the diffusion time, and the Einstein-Stokes relationship (see the expression (A)) as described above. However, JP2005-164560A does not consider that the particles absorb light. In a case in which the particles absorb light, a temperature of the particles may rise. Here, the above-described Einstein-Stokes relationship has a temperature term, and in a case where the temperature changes, such as an increase in the temperature of the particles, an accurate particle diameter cannot be obtained.
For this reason, in JP2005-164560A, it is not possible to accurately obtain the particle diameter and the particle size distribution for black particles such as carbon black and particles having a property of absorbing light such as pigment particles.
In order to avoid the influence of the light absorption by the particles, it is considered to use a light source having a wavelength that is not absorbed by the particles, but, in this case, the preparation of the light source is costly. Furthermore, since the black particles and the like absorb light in a wide wavelength range, it is difficult to eliminate the influence of the light absorption. As described above, at present, it is not possible to cope with particles having various properties.

An object of the present invention is to provide an optical measurement method and an optical measurement device that accurately measure a particle diameter and a particle size distribution of particles contained in a dispersion liquid containing the particles.

In order to achieve the above-described object, an invention [1] is an optical measurement method of a dispersion liquid containing particles, the method comprising: an acquisition step of acquiring a plurality of images of the particles obtained by causing incident light to be incident on the dispersion liquid with a changed intensity, continuously in time for each intensity of the incident light; a measurement step of measuring a moving average distance of the particles for each intensity of the incident light, from the plurality of images acquired continuously in time for each intensity of the incident light, the plurality of images being obtained in the acquisition step; and a calculation step of calculating an apparent particle diameter of the particles for each intensity of the incident light, from the moving average distance of the particles for each intensity of the incident light obtained in the measurement step, to obtain a true particle diameter of the particles from the apparent particle diameter of the particles for each intensity of the incident light.

In the present invention, the above-described true particle diameter is a particle diameter obtained from a diffusion coefficient in a state in which the particle is not affected by an increase in temperature of the particles due to photothermal conversion. In addition, the apparent particle diameter is a particle diameter obtained from a diffusion coefficient in a state in which the particle is affected by an increase in temperature of the particles due to photothermal conversion.

An invention [2] is an optical measurement method of a dispersion liquid containing particles, the optical measurement method comprising: an acquisition step of acquiring a plurality of images of the particles obtained by causing incident light to be incident on the dispersion liquid with a changed intensity, continuously in time for each intensity of the incident light; a measurement step of measuring a moving average distance of the particles for each intensity of the incident light from the plurality of images acquired continuously in time for each intensity of the incident light obtained by the acquisition step; and a calculation step of calculating an apparent particle size distribution for each intensity of the incident light from the moving average distance of the particles for each intensity of the incident light obtained by the measurement step, to obtain a true particle size distribution from the apparent particle size distribution for each intensity of the incident light.

An invention [3] is an optical measurement method of a dispersion liquid containing particles, the optical measurement method comprising: an acquisition step of acquiring a plurality of images of the particles obtained by causing incident light to be incident on the dispersion liquid with a changed intensity, continuously in time for each intensity of the incident light for each intensity of the incident light; a measurement step of measuring a moving average distance of the particles for each intensity of the incident light, from the plurality of images acquired continuously in time for each intensity of the incident light the plurality of images being obtained in the acquisition step; and a calculation step of calculating a diffusion coefficient for each intensity of the incident light from the moving average distance of the particles for each intensity of the incident light, obtained in the measurement step, to obtain a diffusion coefficient at a zero intensity of the incident light from the diffusion coefficient for each intensity of the incident light, and to obtain a true particle diameter of the particles from the diffusion coefficient at the zero intensity of the incident light.

An invention [4] is the optical measurement method according to the invention [1] or [2], in which the calculation step includes, obtaining a relationship between the apparent particle diameter of the particles and the intensity of the incident light, and obtaining the true particle diameter of the particle, assuming that an intensity dependence of the apparent particle diameter of the particles on the intensity of the incident light is linear.

An invention [5] is the optical measurement method according to the invention [3], in which the calculation step includes, obtaining a relationship between the diffusion coefficient of the particles and the intensity of the incident light, and obtaining a diffusion coefficient at a zero intensity of the incident light, assuming that an intensity dependence of a diffusion coefficient of the particles on the intensity of the incident light is linear.

An invention [6] is the optical measurement method according to the invention [2], in which the calculation step includes calculating a plurality of particle diameters at a certain ratio in a cumulative distribution of the apparent particle size distribution of the particles, obtaining a relationship between the particle diameters at the certain cumulative percentage and the intensity of the incident ligh, and obtaining a true particle size distribution, assuming that an intensity dependence of the plurality of particle diameters at the certain cumulative percentage on the intensity of the incident light is linear.

An invention [7] is the optical measurement method according to the invention [6], in which the certain ratio is a ratio including 10% of all the particles constituting the particle size distribution, a cumulative percentage including 50% of all the particles constituting the particle size distribution, or a cumulative percentage including 90% of all the particles constituting the particle size distribution.

An invention [8] is the optical measurement method according to the invention [4], further comprising: a step of obtaining a second temperature after a temperature rise of the particles at a first temperature due to light absorption of the incident light; and a step of obtaining the true particle diameter of the particles from a diffusion coefficient after the temperature rise using an expression representing a diffusion coefficient in a case where the temperature rises.

An invention [9] is an optical measurement device of a dispersion liquid containing particles, the device comprising: a light source that causes incident light to be incident on the dispersion liquid with a changed intensity; an image acquisition unit that acquires a plurality of images of the particles obtained by causing the incident light to be incident on the dispersion liquid with the changed intensity, continuously in time for each intensity of the incident light; a measurement unit that measures a moving average distance of the particles for each intensity of the incident light from the plurality of images acquired continuously in time for each intensity of the incident light obtained by the image acquisition unit; and a calculation unit that calculates an apparent particle diameter of the particles for each intensity of the incident light from the moving average distance of the particles for each intensity of the incident light obtained by the measurement unit, and obtains a true particle diameter of the particles from the apparent particle diameter of the particles for each intensity of the incident light.

An invention [10] is an optical measurement device of a dispersion liquid containing particles, the device comprising: a light source that causes incident light to be incident into the dispersion liquid with a changed intensity; an image acquisition unit that acquires a plurality of images of the particles obtained by causing the incident light to be incident on the dispersion liquid with the changed intensity, continuously in time for each intensity of the incident light; a measurement unit that measures a moving average distance of the particles for each intensity of the incident light from the plurality of images that are temporally continuously acquired for each intensity of the incident light obtained by the image acquisition unit; and a calculation unit that calculates an apparent particle size distribution for each intensity of the incident light from the moving average distance of the particles for each intensity of the incident light obtained by the measurement unit, and obtains a true particle size distribution from the apparent particle size distribution for each intensity of the incident light.

An invention [11] is an optical measurement device of a dispersion liquid containing particles, the device comprising: a light source that causes incident light to be incident into the dispersion liquid with a changed intensity; an image acquisition unit that acquires a plurality of images of the particles obtained by causing the incident light to be incident on the dispersion liquid with the changed intensity, continuously in time for each intensity of the incident light; a measurement unit that measures a moving average distance of the particles for each intensity of the incident light from the plurality of images acquired continuously in time for each intensity of the incident light obtained by the image acquisition unit; and a calculation unit that calculates a diffusion coefficient for each intensity of the incident light from the moving average distance of the particles for each intensity of the incident light obtained by the measurement unit, obtains a diffusion coefficient at a zero intensity of the incident light from the diffusion coefficient for each intensity of the incident light, and obtains a true particle diameter of the particles from the diffusion coefficient at the zero intensity of the incident light.

An invention [12] is the optical measurement device according to the invention [9] or [10], in which the calculation unit obtains a relationship between the apparent particle diameter of the particles and the intensity of the incident light, and obtains the true particle diameter of the particles, assuming that intensity dependence of the apparent particle diameter of the particles on the incident light is linear.

An invention [13] is the optical measurement device according to the invention [11], in which the calculation unit obtains a relationship between the diffusion coefficient of the particles and the intensity of the incident light, and obtains the diffusion coefficient at the zero intensity of the incident light, assuming that intensity dependence of the diffusion coefficient of the particles on the incident light is linear.

An invention [14] is the optical measurement device according to the invention [10], in which the calculation unit calculates a plurality of particle diameters at a certain cumulative distribution in an integrated distribution of the apparent particle size distribution of the particles, obtains a relationship between the particle diameters at the certain cumulative percentage and the intensity of the incident light, and obtains a true particle size distribution, assuming that intensity dependence of the plurality of particle diameters at the certain cumulative percentage on the incident light is linear.

An invention [15] is the optical measurement device according to the invention [14], in which the certain ratio is a cumulative percentage including 10% of all particles constituting the particle size distribution, a cumulative percentage including 50% of all particles constituting the particle size distribution, or a cumulative percentage including 90% of all particles constituting the particle size distribution.

An invention [16] is the optical measurement device according to the invention [12], in which the calculation unit obtains a second temperature after a temperature rise of the particles at a first temperature due to light absorption of the incident light, and obtains the true particle diameter of the particles from the diffusion coefficient after the temperature rise using an expression representing a diffusion coefficient in a case where the temperature rises.

An invention [17] is the optical measurement device according to any one of the inventions [9] to [11], in which the light source emits the incident light including first laser light having a wavelength in a light absorption wavelength range of the particles and second laser light having a wavelength other than the light absorption wavelength range of the particles, and the light source changes the intensity of the incident light by changing an intensity of the first laser light.

An invention [18] is the optical measurement device according to the invention [17], further comprising: a filter that attenuates light having a wavelength in the light absorption wavelength range of the particles, the filter being disposed between the dispersion liquid and the image acquisition unit.

An invention [19] is the optical measurement device according to any one of the inventions [9] to [18], further comprising: a storage unit in which the dispersion liquid is stored, wherein the storage unit has an optical element and a transparent substrate, and the dispersion liquid is stored between the optical element and the transparent substrate, and the optical element is a trapezoidal prism, a semicylindrical prism, or a semicircular prism.

An invention [20] is the optical measurement device according to any one of the inventions [9] to [18], further comprising: a storage unit that has a flow path in which the dispersion liquid is stored; and a lens that is provided between the flow path and the image acquisition unit, wherein the dispersion liquid is stored in the flow path, and the incident light is incident on the dispersion liquid in the flow path from the light source.

According to the present invention, it is possible to provide an optical measurement method and an optical measurement device that accurately measure a particle diameter and a particle size distribution of particles contained in a dispersion liquid containing the particles.

### BRIEF DESCRIPTION OF THE DRAWINGS

FIG. 1 is a graph illustrating a relationship between a diffusion coefficient of particles and an intensity of incident light.
FIG. 2 is a graph illustrating a relationship between reciprocals of particle diameters of a plurality of types of particles and the intensity of the incident light.
FIG. 3 is a graph illustrating a relationship between the diffusion coefficients of the particles and the intensities of the incident light for each wavelength of the incident light.
FIG. 4 is a graph illustrating a relationship between the reciprocals of the particle diameters of the particles and the intensities of the incident light.
FIG. 5 is a schematic view illustrating a first example of an optical measurement device according to an embodiment of the present invention.
FIG. 6 is a schematic view showing an example of a plurality of images acquiredcontinuously in time.
FIG. 7 is a schematic view showing an example of a movement trajectory of particles.
FIG. 8 is a graph showing a relationship between a reciprocal of an average particle diameter of particles and an intensity of incident light.
FIG. 9 is a graph showing a relationship between a reciprocal of an average particle diameter of particles and an intensity of incident light.
FIG. 10 is a graph showing a relationship between a particle diameter of particles and a cumulative frequency.
FIG. 11 is a graph showing a particle size distribution of particles.
FIG. 12 is a schematic view illustrating a second example of an optical measurement device according to an embodiment of the present invention.
FIG. 13 is a schematic view illustrating a third example of an optical measurement device according to an embodiment of the present invention.

### DESCRIPTION OF THE PREFERRED EMBODIMENTS

Hereinafter, an optical measurement method and an optical measurement device according to an embodiment of the present invention will be described in detail based on preferred embodiment illustrated in the accompanying drawings.

The drawings illustrated below are merely examples for describing the present invention, and the present invention is not limited to the drawings illustrated below.

Hereinafter, the expression "to" indicating a numerical range includes numerical values written on both sides of "to". For example, in a case where ε is a numerical value εα to a numerical value εβ, the range of ε is a range including the numerical value εα and the numerical value εβ, and in mathematical symbols, εα ≤ ε ≤ εβ.

Unless otherwise specified, a specific angle, orthogonality, and the like include an error range generally allowed in the corresponding technical field.

In addition, the temperature also includes an error range generally allowed in the corresponding technical field unless otherwise noted.

### (Measurement Principle for Optical Measurement)

First, a measurement principle for a particle diameter of particles will be described.

A method of measuring a diffusion coefficient of the particles and converting the diffusion coefficient into the particle diameter is known.

From the Stokes-Einstein expression given in the following expression (1), a particle diameter d₀ of the particles is quantitatively determined from a diffusion coefficient D of the particles. In Expression (1), k_{B} is a Boltzmann constant, T₀ is a temperature of a solvent, and η₀ is a viscosity of the solvent. In Expression (1), the viscosity η₀ of the solvent is the same as the viscosity coefficient µ of the fluid in Expression (A). Therefore, the diffusion coefficient of the particle can be represented by Expression (1) using the viscosity coefficient µ of the fluid.

In the following expression (1), the absorption of light by the particles is not taken into account. The solvent is a solvent in the dispersion liquid containing the particles.

Here, the absorption of light by the particles is the absorption of light incident on the particles into the particles. In a case in which the particles absorb light, a temperature of the particles may rise. Therefore, in a case in which the particles having a property of absorbing light absorb light, the temperature of the particles may rise. The term "light absorption" is used as the same meaning as "absorbing light" as described above.$D = \frac{{k}_{B} {T}_{0}}{3 {πη}_{0} {d}_{0}} = \frac{{k}_{B} {T}_{0}}{3 π {μ}_{0} {d}_{0}}$ (1)

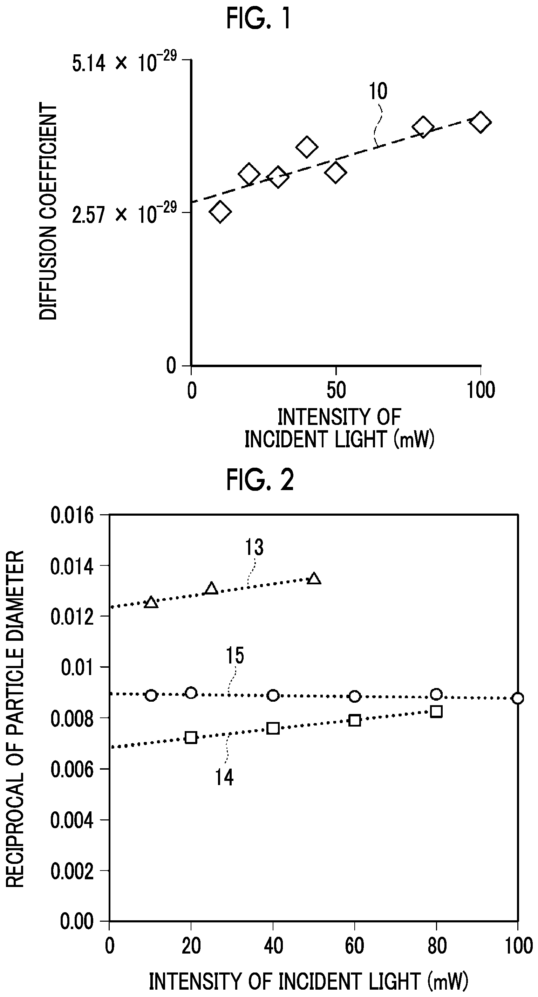

Here, in a case where the absorption of light by the particle is taken into consideration, in a particle having a property of absorbing light, a relationship between the diffusion coefficient of the particle and the intensity of the incident light is linear as shown in FIG. 1, for example, as indicated by a straight line 10. That is, the dependence of the diffusion coefficient of the particles on the intensity of the incident light is linear. In this case, the particle diameter obtained from the diffusion coefficient of a value extrapolated to the intensity of the incident light of 0 (zero) on the straight line 10 is a true particle diameter that does not depend on the intensity of the incident light. By using the fact that the dependence of the diffusion coefficient of the particles on the intensity of the incident light is linear, the true particle diameter that does not depend on the intensity of the incident light can be obtained even for the particles having the property of absorbing light. From this, even in a case where the dispersion liquid contains particles having various properties such as a property of absorbing light, it is possible to accurately measure the particle diameter of the particles contained in the dispersion liquid.

The extrapolation method of extrapolating the intensity of the incident light to 0 is not limited to linear. The extrapolation can be performed by fitting any function even in a case in which the extrapolation method is non-linear.

The relationship between the diffusion coefficient of the particle and the intensity of the incident light, which is shown in FIG. 1, also applies to other particles.

In addition, in the above-described analysis example, the diffusion coefficient is used, but even in a case of using the reciprocal of the particle diameter of the particles instead of the diffusion coefficient, the relationship between the reciprocal of the particle diameter of the particles and the intensity of the incident light is established in the same manner as the diffusion coefficient. Specifically, for example, the relationship between the reciprocal of the particle diameter of the particles and the intensity of the incident light is established as in a straight line 13 and a straight line 14 illustrated in FIG. 2. In FIG. 1, a vertical axis represents the diffusion coefficient, but in FIG. 2, a vertical axis represents the reciprocal of the particle diameter.

On the other hand, in a case of particles having small light absorption, for example, particles transparent to light having a wavelength of the incident light of the particles, the dependence on the intensity of the incident light is extremely small as in a straight line 15 illustrated in FIG. 2. Therefore, a difference between the particle diameter obtained by extrapolating the intensity of the incident light to 0 (zero) and the particle diameter obtained in a case in which the intensity of the incident light is larger than 0 is extremely small. Therefore, for the particles having small light absorption, it is not necessary to obtain the particle diameter by extrapolating the intensity of the incident light to 0 (zero).

Here, in a case in which a complex refractive index of a material constituting the particles is expressed by N ≡ n + ik, the particles are transparent in a case of k = 0. That is, the transparent particle is a particle in which k = 0 in N ≡ n + ik.

In the expression N ≡ n + ik representing the complex refractive index, i represents an imaginary number. The real part n of the complex refractive index is a so-called refractive index. The imaginary part k of the complex refractive index is called an extinction coefficient representing the absorption.

Even in a case of k ≈ 0, which is not strictly k = 0, but depends on intensity of the irradiation light, the particles can also be treated as substantially transparent particles.

The straight line 13 indicates a result in a dispersion liquid of a red pigment in which PR254 (C.I. Pigment Red 254) is used as the red pigment. The straight line 14 indicates a result in a dispersion liquid of a red pigment in which PR272 (C.I. Pigment Red 272) is used as the red pigment. The measurement wavelength for the straight line 13 and the straight line 14 is 488 nm. The straight line 15 indicates a result in a dispersion liquid in which polystyrene particles having a particle diameter of 100 nm are used. The polystyrene particles are particles having small light absorption, and Nanobead NIST Traceable Particle Size Standard, 100nm is used. The solvent of the dispersion liquid described above is water. The measurement wavelength for the straight line 15 is 488 nm.

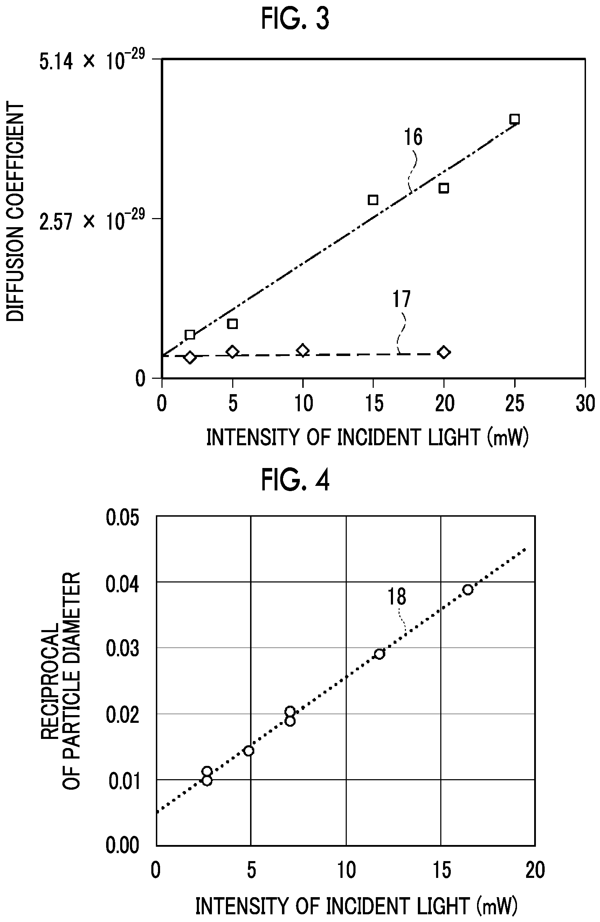

Even in a case in which the measurement is performed by changing the wavelength of the incident light in the dispersion liquid containing the same particles, as illustrated in FIG. 3, the particle diameter can be obtained from the diffusion coefficient of a value extrapolated to the intensity of the incident light of 0 (zero) regardless of the wavelength of the incident light.

FIG. 3 is a graph illustrating the relationship between the diffusion coefficient of the particles and the intensity of the incident light for each wavelength of the incident light.

In FIG. 3, a straight line 16 indicates a result in which the wavelength of the incident light is 488 nm. The straight line 17 indicates a result in which the wavelength of the incident light is 633 nm.

The result is a result in a dispersion liquid of a yellow pigment in which PY74 (C.I. Pigment Yellow 74) is used as the yellow pigment in the particle. The solvent for the dispersion liquid of the yellow pigment described above is water.

The above description is an analysis example in a particle dispersion system having a low concentration, for example, 0.1% to 0.001% by volume. In the above-described analysis example, the diffusion coefficient is used, but as illustrated in FIG. 2, even in a case of using the reciprocal of the particle diameter of the particles instead of the diffusion coefficient, the true particle diameter that does not depend on the intensity of the incident light can be obtained by extrapolating the value of the reciprocal of the particle diameter of the particles to the intensity of the incident light of 0 (zero).

Although the low concentration has been described above, even in a case of a high concentration, for example, a particle dispersion system having a concentration of 1% to 20% by volume, the true particle diameter independent of the intensity of the incident light can be obtained by extrapolating the intensity of the incident light to 0 (zero) in the same manner as in the above-described low concentration.

For example, as shown in FIG. 4, there is a linear relationship between the reciprocal of the particle diameter of the particles and the intensity of the incident light. The diffusion coefficient of the particles and the intensity of the incident light are represented by a straight line 18 shown in FIG. 4. In FIG. 4, a vertical axis represents the reciprocal of the particle diameter of the particles, but as described above, even in a case in which a vertical axis represents the diffusion coefficient, there is a linear relationship between the diffusion coefficient and the intensity of the incident light.

Next, a case will be described in which the particles absorb light and the temperature rises.

A diffusion coefficient D' in a case in which the system is in equilibrium with a local temperature rise in the vicinity of the particles due to the light absorption is expressed by the following expression (2). T' in the following expression (2) is a temperature of the solvent after the light absorption, and η' in the following expression (2) is a viscosity of the solvent at the temperature T'. In this case, it is assumed that the temperature rise is localized only in the vicinity of the particles and the temperature cannot be detected by a thermometer attached to the device. In this case, the thermometer attached to the device indicates a temperature T₀. In a case in which the particle diameter measured by using the dynamic light scattering method (DLS) is denoted by an apparent particle diameter d', a relational expression between the particle diameter d' and the above-described diffusion coefficient D' is expressed by the following expression (3). The following expression (4) is obtained from the expressions (2) and (3).$D ′ = \frac{{k}_{B} T ′}{3 πη ′ {d}_{0}}$ (2) $D ′ = \frac{{k}_{B} {T}_{0}}{3 {πη}_{0} d ′}$ (3) $\frac{{d}_{0}}{d ′} = \frac{{η}_{0} T ′}{η ′ {T}_{0}}$ (4)

Here, in a case in which the temperature rise in the vicinity of the particles due to the light absorption is denoted by ΔT, the temperature rise is expressed by the following expression (5). $T ′ = {T}_{0} + ΔT$ (5)

In a case where the following expression (6) is established between the intensity I of the incident ray and the temperature rise ΔT of the particles due to light absorption, in a case where the expressions (4) and (5) are substituted into the expression (3) yields the following expression (7). $ΔT = α ⋅ I$ (6) $\frac{{d}_{0}}{d ′} = \frac{{η}_{0}}{η ′} \left(1+\frac{Δ T}{{T}_{0}}\right) = \frac{{η}_{0}}{η ′} \left(1+\frac{α}{{T}_{0}}I\right)$ (7)

It is assumed that a relationship between the viscosity of the solvent and the temperature of the solvent is expressed by the following expression (8) by the Andrade expression. In the following expression (8), B is a proportional constant, E is a flow active energy, and R is a gas constant.$η = B exp \left(\frac{E}{R T}\right)$ (8)

Here, the following expression (9) is defined for 1/η'. Then, in a case in which the Taylor expansion is performed on the following expression (9) for the temperature, the following expression (10) is obtained. Then, in a case in which the following expression (9) is substituted into the expression (6), the following expression (11) is obtained.$F ≡ \frac{1}{η ′} = {B}^{- 1} exp \left(-\frac{E}{RT}\right)$ (9) $\begin{matrix}F = F \left({T}_{0}\right) + F ′ \left({T}_{0}\right) \left(T′-{T}_{0}\right) + ⋯ = {B}^{- 1} exp \left(-\frac{E}{{RT}_{0}}\right) + \\ {B}^{- 1} \left(\frac{E}{{RT}_{0}^{2}}\right) exp \left(-\frac{E}{{RT}_{0}}\right) Δ T + ⋯\end{matrix}$ (10) $\begin{matrix}\frac{{d}_{0}}{d ′} = \left(1+\frac{E Δ T}{{RT}_{0}^{2}}\right) ⋅ \left(1+\frac{Δ T}{{T}_{0}}\right) + ⋯ = 1 + \frac{1}{{T}_{0}} \left(1+\frac{E}{{RT}_{0}}\right) Δ T + \\ ⋯ = 1 + \frac{α}{{T}_{0}} \left(1+\frac{E}{{RT}_{0}}\right) I + ⋯\end{matrix}$ (11)

Here, in the expression (11), in a case in which ΔT < T₀, the reciprocal of the particle diameter is linear with respect to the intensity I of the incident light. In this case, the following expression (12) is obtained. In the following expression (12), in a case of treating only the linear term, the following expression is obtained, which further becomes the following expression (13).$\frac{1}{d ′} = \frac{1}{{d}_{0}} + \frac{1}{{d}_{0}} ⋅ \frac{α}{{T}_{0}} \left(1+\frac{E}{{RT}_{0}}\right) ⋅ I + ⋯$ (12) $\frac{{d}_{0}}{d ′} = 1 + \frac{α}{{T}_{0}} \left(1+\frac{E}{{RT}_{0}}\right) ⋅ I$$\frac{{d}_{0}}{d ′} ≅ 1 + \frac{1}{{T}_{0}} \left(1+\frac{E}{{RT}_{0}}\right) Δ T$ (13)

A term of the expression (11) proportional to the intensity I of the incident light is defined as β, and β is defined as in the following expression (14). In this case, 1/d' can be expressed by the following expression (15). In a case in which the following expression (15) is solved for d₀, the following expression (16) is obtained.$β ≡ \frac{α}{{T}_{0}} \left(1+\frac{E}{{RT}_{0}}\right)$ (14) $\frac{1}{d ′} = \frac{1}{{d}_{0}} + \frac{β}{{d}_{0}} ⋅ I$ (15)

In addition, in a case where the expression (15) is multiplied by kBT/(3πη), the following expression (15-1) is obtained. In the expression (15-1), D' and D₀ are diffusion coefficients. $D ′ = {D}_{0} + {βD}_{0} ⋅ I$ (15-1) ${d}_{0} = \left(1+β\right) ⋅ I ⋅ d ′$ (16)

From the expression (15-1), it can be seen that a slope of the straight line 10 illustrating the intensity dependence of the incident light illustrated in FIG. 1 is βD₀, and an intercept of the straight line 10 is the diffusion coefficient D₀. Therefore, β can be obtained from βD₀ representing the slope and the intercept, that is, the diffusion coefficient D₀. The diffusion coefficient D₀ can be obtained from the expression (15-1) using the intensity I of the incident light and the diffusion coefficient D' at the intensity I of the incident light, and the particle diameter d₀ can be obtained from the expression (1). The above-described β is an index value representing the temperature dependence of the particle diameter of the particles.

The particle diameter d' at the intensity I of the incident light can also be obtained from the expression (3) using the diffusion coefficient D'.

In a case in which a vertical axis of FIG. 1 is the reciprocal of the particle diameter, for example, in FIG. 2, it can be seen that the slope of the straight line 10 illustrating the intensity dependence of the incident light is β/d₀ from the expression (15), and the intercept of the straight line 10 is the particle diameter d₀. Therefore, β can be obtained from β/d₀ representing the slope and the intercept, that is, the particle diameter d₀. The particle diameter d₀ can be obtained from the expression (15) using the intensity I of the incident light and the particle diameter d' at the intensity I of the incident light. The above-described β is an index value representing the temperature dependence of the particle diameter of the particles.

The particle diameter d' at the intensity I of the incident light can also be obtained from the expression (3) using the diffusion coefficient D'.

In addition, in a case in which the particle diameter d' and the particle diameter d₀ at any intensity I of the incident light are known from the expression (13) and FIG. 1, the constant E/R related to the viscosity of the solvent and the temperature T₀ are known, and thus the temperature rise ΔT at each intensity of the incident light is obtained. As a result, the intensity I of the incident light and a proportional coefficient α of the temperature rise ΔT in the expression (6) are obtained, and the true temperature T' = T₀ + ΔT during the measurement is known. In this case, the particle diameter d₀ is obtained from the expression (2) by measuring the particle diameter at any intensity of the incident light. It is assumed that the dependence of the viscosity of the solvent on the temperature is known. From the above, even in a case where the dispersion liquid contains particles having various properties such as a property of absorbing light, the particle diameter of the particles contained in the dispersion liquid can be accurately measured.

### (First Example of Optical Measurement Device)

Hereinafter, the optical measurement device used in the optical measurement method will be described.

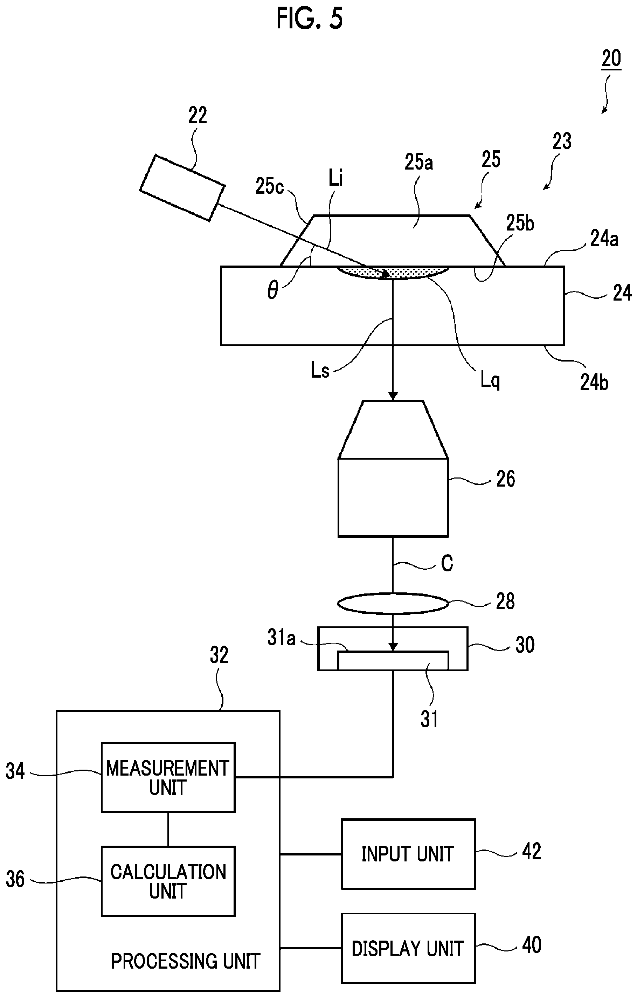

FIG. 5 is a schematic view illustrating a first example of the optical measurement device according to the embodiment of the present invention.

An optical measurement device 20 shown in FIG. 5 causes an incident ray Li to be incident on a dispersion liquid Lq containing particles with a changed intensity, acquires images of a plurality of particles continuously in time for each intensity of the incident ray Li, and obtains a true particle diameter of the particles.

The optical measurement device 20 includes a light source 22, a storage unit 23, an objective lens 26, an image forming lens 28, an image acquisition unit 30, and a processing unit 32. Further, the optical measurement device 20 includes a display unit 40 and an input unit 42.

The display unit 40 displays, for example, an image of the particles, a movement trajectory of the particles, an apparent particle diameter of the particles, a true particle diameter of the particles, an apparent particle size distribution, a true particle size distribution, and the like, which are obtained by the processing unit 32, and various known displays are used.

The input unit 42 is various input devices for inputting various types of information to the processing unit 32 in response to an instruction from an operator. The input unit 42 is, for example, a mouse, a keyboard, or the like.

The display unit 40 and the input unit 42 may be directly connected to the processing unit 32, or may be provided at a remote location away from the processing unit 32.

The storage unit 23 stores the dispersion liquid Lq containing the particles, and functions as a sample cell for the dispersion liquid Lq. The storage unit 23 includes, for example, a transparent substrate 24 and an optical element 25. The dispersion liquid Lq is stored between the optical element 25 and the transparent substrate 24.

The transparent substrate 24 is, for example, a transparent flat plate, and is made of optical glass or optical plastic. In addition, the transparent substrate 24 transmits scattered light Ls and the like generated by incident light Li incident on the dispersion liquid Lq. The scattered light Ls is emitted from a back surface 24b of the transparent substrate 24.

Here, the term "transparent" means that the light transmittance is 40% or more, preferably 80% or more, and more preferably 90% or more with respect to the wavelength to be used, unless otherwise specified. The wavelength and the wavelength range to be used are not particularly limited, but it is desirable that the wavelength is in a range of 200 to 2,500 nm, which is a range of ultraviolet light to near-infrared light that can propagate in the air.
The light transmittance is measured using "Plastics - Determination of total light transmittance and reflectance" specified in Japanese Industrial Standards (JIS) K 7375: 2008.

The optical element 25 is, for example, a trapezoidal prism 25a. The trapezoidal prism 25a has a configuration in which a lower base 25b is wider than an upper base.

The lower base 25b of the trapezoidal prism 25a is disposed in contact with a surface 24a of the transparent substrate 24. The dispersion liquid Lq provided on the front surface 24a of the transparent substrate 24 is covered with the trapezoidal prism 25a.

The storage unit 23 may have a configuration in which a temperature adjustment section such as a Peltier element is provided to adjust the temperature of the dispersion liquid Lq.

The light source 22 is disposed at a position where the incident light Li is incident on the dispersion liquid Lq of the transparent substrate 24. The light source 22 emits light to cause the dispersion liquid Lq to be incident on the incident light Li at a preset angle θ.

The objective lens 26 is disposed to face a back surface 24b of the transparent substrate 24. The image forming lens 28 is disposed to align the objective lens 26 with an optical axis C. The optical axis C is orthogonal to the front surface 24a of the transparent substrate 24. Therefore, the incident light Li is not directly incident on the objective lens 26. The disposition of the objective lens 26 and the image forming lens 28 is not particularly limited to the disposition in which the optical axis C is orthogonal to the front surface 24a of the transparent substrate 24.

The image acquisition unit 30 has an image sensor 31. The processing unit 32 has a measurement unit 34 and a calculation unit 36. Although not shown, the processing unit 32 has a memory that stores various types of information, for example, data of an image output to the measurement unit 34, data of a particle size distribution shape, and the like.

The light source 22 has a function of causing the incident light Li to be incident on the dispersion liquid Lq of the transparent substrate 24 with a changed intensity as described above. The light source 22 can change the intensity of the incident light Li.

In addition, for example, a laser that emits laser light including light having a wavelength in a light absorption wavelength range of the particles contained in the dispersion liquid Lq is used as the light source 22. For example, a xenon light source and a superluminescent diode (SLD) can also be used as the light source 22.

The objective lens 26 collects scattered light Ls generated by the incident light Li incident on the dispersion liquid Lq. In the scattered light Ls generated by the incident light Li, the scattered light Ls transmitted through the objective lens 26 is incident on the image forming lens 28.

The image forming lens 28 forms an image of the scattered light Ls transmitted through the objective lens 26 on a light-receiving surface 31a of the image sensor 31.

The image sensor 31 has the light-receiving surface 31a that receives the light imaged by the image forming lens 28 described above. The scattered light Ls imaged by the image forming lens 28 described above is imaging light of the particles as a measurement target.

The image sensor 31 images the particles, for example, by converting the light received by the light-receiving surface 31a into an electrical signal through photoelectric conversion. More specifically, in the image sensor 31, the scattered light including the image of the particles as the measurement target described above is incident on the light-receiving surface 31a, and the scattered light is photoelectrically converted to image the particles. In this way, data of the image of the particles is acquired by the image sensor 31, and the image of the particles is obtained. The data of the image of the particles is output from the image sensor 31 to the measurement unit 34 of the processing unit 32, and various types of processing are performed on the data of the image of the particles in the processing unit 32. In the processing unit 32, various types of processing can be executed by temporarily storing the data of the image of the particles in the memory (not shown) described above.

Since the data of the image of the particles is acquired continuously in time, for example, in the image sensor 31, a video can be acquired at a preset frame rate, and the data of the image of the particles continuously in time can be acquired from the acquired data of the video.

The above-described frame rate is not particularly limited, but from the viewpoint of the accuracy of the movement trajectory of the particles, for example, it is preferably 0.1 to 1,000 frames per second (fps).

In a case where the data of the image of the particles can be acquired continuously in time as described above, the image sensor 31 is not particularly limited, and for example, a known photoelectric conversion element in the related art can be used. More specifically, a charge coupled device (CCD) type image sensor or a complementary metal oxide semiconductor (CMOS) image sensor can be used as the image sensor 31.

In the optical measurement device 20, the incident ray Li is incident from the inclined surface 25c of the trapezoidal prism 25a, the incident ray Li is incident on the dispersion liquid Lq at the preset angle θ, and the particles of the dispersion liquid Lq absorb the incident ray Li. In this case, the scattered light Ls scattered at an angle different from the incident ray Li is generated, and the scattered light Ls is collected by the objective lens 26 and is imaged on the image sensor 31 by the image forming lens 28. As a result, in the image sensor 31, the data of the dark-field image of the particles is obtained as the data of the image of the particles. The data of the image of the particles is acquired continuously in time.

In the optical measurement device 20, as described above, the optical axis C is orthogonal to the front surface 24a of the transparent substrate 24, and the incident ray Li is obliquely incident on the front surface 24a of the transparent substrate 24 at the angle θ. As a result, the incident ray Li is not directly incident on the objective lens 26. Therefore, in a case where the scattered light Ls is not generated, the incident ray Li is not directly incident on the objective lens 26, and thus a dark image is obtained. On the other hand, in a case where the scattered light Ls is generated, an image based on the scattered light Ls, that is, an image of the particles is obtained.

In the optical measurement device 20, the optical element 25 is not limited to the trapezoidal prism 25a, and a semicylindrical prism or a semicircular prism can be used.

In addition, in the optical measurement device 20, the trapezoidal prism 25a is provided as the optical element 25, but a configuration in which the optical element 25 such as the trapezoidal prism 25a is not provided may be adopted.

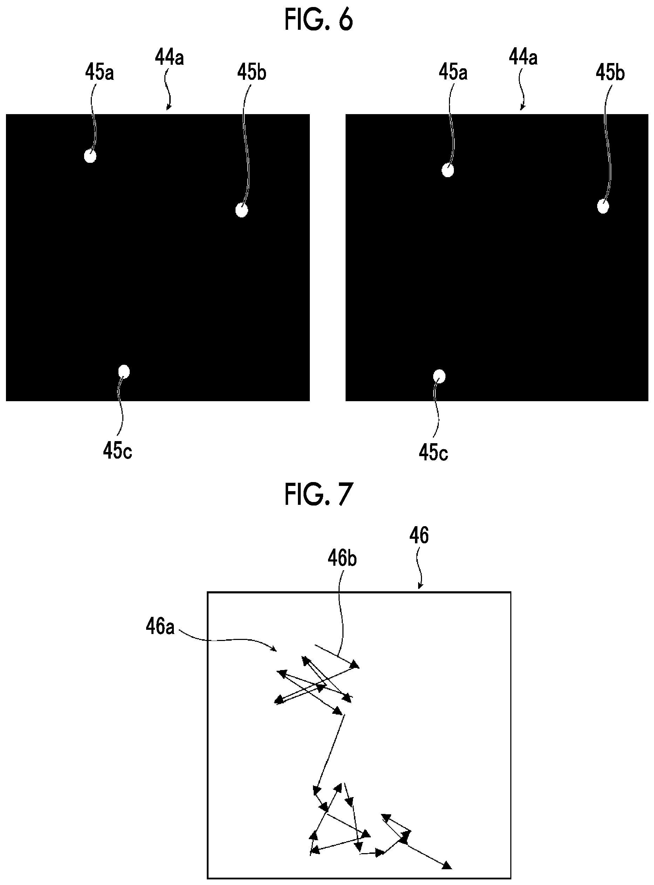

Here, FIG. 6 is a schematic view showing an example of a plurality of images acquired continuously in time. FIG. 7 is a schematic view showing an example of a movement trajectory of the particles.

A first image 44a and a second image 44b shown in FIG. 6 are temporally continuous images obtained by using the incident ray Li having a specific intensity. The first image 44a and the second image 44b are examples of dark-field images.

The first image 44a is an image at time point t₁, and the second image 44b is an image at time point t₂. For the sake of description, the first image 44a and the second image 44b both show three particles, that is, a first particle 45a, a second particle 45b, and a third particle 45c.

The measurement unit 34 measures the moving average distance of the particles for each intensity of the incident ray Li for all the particles included in the images, that is, for all the measured particles, from the plurality of images acquired continuously in time for each intensity of the incident ray Li obtained by the image acquisition unit 30.

For example, a centroid position is obtained as each position of the first particle 45a, the second particle 45b, and the third particle 45c shown in FIG. 6. The centroid position can be obtained by known image analysis. For example, in the first image 44a and the second image 44b, the contours of the first particle 45a, the second particle 45b, and the third particle 45c are extracted, respectively. Next, a position of a geometric center of a region surrounded by the contours of the first particle 45a, the second particle 45b, and the third particle 45c is obtained. The position of the geometric center is the centroid position.

A movement trajectory (not shown) is calculated for each of the first particle 45a, the second particle 45b, and the third particle 45c from the positions of the first particle 45a, the second particle 45b, and the third particle 45c in the first image 44a and the second image 44b. The movement trajectory of the particles can be obtained by known image analysis. For example, a difference or a sum between the first image 44a and the second image 44b is obtained, a nearest particle position is obtained, a movement direction and a movement amount of each particle are specified from each position of the first particle 45a, the second particle 45b, and the third particle 45c in the first image 44a and each position of the first particle 45a, the second particle 45b, and the third particle 45c in the second image 44b, a displacement vector of each particle is calculated, and a movement trajectory of each particle is calculated.

A movement amount of the particles per unit imaging time interval is obtained from the movement trajectory of the particles between the first image 44a and the second image 44b arranged in time series. The unit imaging time interval is, for example, a time interval between a time point t₁ and a time point t₂. The unit imaging time interval corresponds to Δt in Expression (A). In addition, in a case where the first image 44a and the second image 44b are images constituting a motion picture, a frame rate of the motion picture corresponds to Δt in Expression (A).

The movement amount of the particles per unit imaging time interval is a movement distance of the particles. A movement distance 46b of the particles shown in FIG. 7 corresponds to the displacement vector.

The movement trajectory is obtained by using a plurality of images that are temporally continuous, and for example, a movement trajectory 46a as shown in an image 46 of FIG. 7 is obtained for the first particle 45a. The movement of the particles between the images is represented by the displacement vector. Here, a moving average distance of the particles due to the Brownian motion is denoted by Sp as shown in the following expression.

An average value of the movement distances of the particles corresponding to the displacement vector is obtained to obtain the moving average distance Sp of the particles due to the Brownian motion.

In the measurement unit 34, the moving average distance of the particles is measured for each intensity of the incident light Li by using a plurality of images that are temporally continuous and that are acquired for each intensity of the incident light Li obtained by the image acquisition unit 30. Then, the moving average distance Sp of the particles due to the Brownian motion is obtained for each intensity of the incident light Li.$\sqrt{\overline{{x}^{2}}} = Sp$

The calculation unit 36 calculates an apparent particle diameter of the particles for each intensity of the incident light Li from the moving average distance of the particles for each intensity of the incident light Li obtained by the measurement unit 34. A true particle diameter of the particles is obtained from the apparent particle diameter of the particles for each intensity of the incident light Li.

Specifically, the apparent particle diameter is calculated for all the measured particles for each intensity of the incident light Li from the above expression (A) by using the moving average distance Sp of the particles due to the Brownian motion for each intensity of the incident light Li. An apparent average particle diameter can also be calculated for each intensity of the incident light Li from the apparent particle diameters of all the measured particles.

The calculation unit 36 obtains a relationship between the apparent particle diameter of the particles and the intensity of the incident light on the assumption that the intensity dependence of the apparent particle diameter of the particles is linear, and obtains the true particle diameter of the particles.

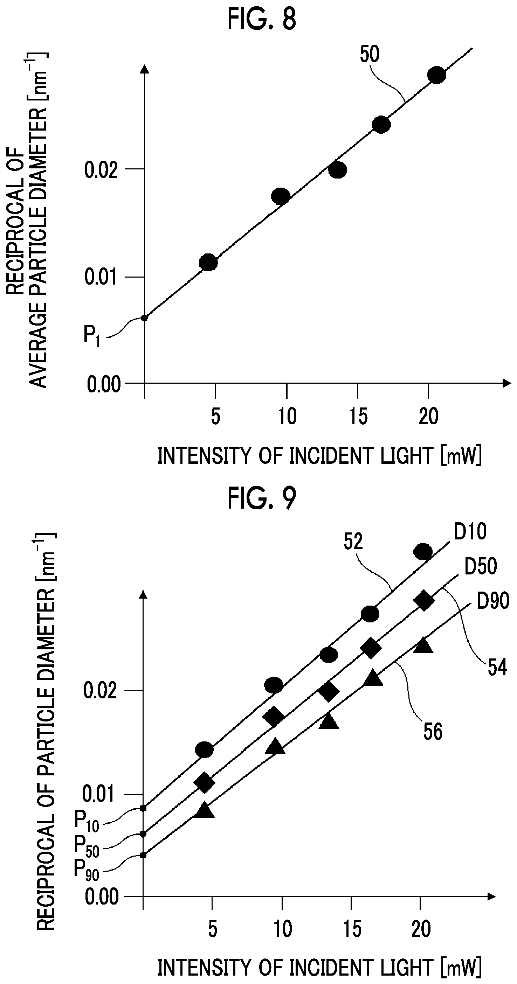

For example, as shown in FIG. 8, the apparent average particle diameter is plotted with the reciprocal of the average particle diameter as the vertical axis and the intensity of the incident light as the horizontal axis. In this case, it is assumed that the intensity dependence of the apparent average particle diameter is linear. Therefore, an approximate straight line 50 is obtained for the value of the apparent average particle diameter. In the approximate straight line 50, an average particle diameter at a point P₁ extrapolated to an intensity of the incident light of 0 (zero) is a true average particle diameter that does not depend on the intensity of the incident light. That is, the average particle diameter at the intercept of the approximate straight line 50 is the true average particle diameter that does not depend on the intensity of the incident light.

In this way, the true particle diameter that does not depend on the intensity of the incident light is obtained. From this, even in a case where the dispersion liquid contains particles having various properties such as a property of absorbing light, the particle diameter of the particles contained in the dispersion liquid can be measured with high accuracy.

The average value of the particles of the entire system of the dispersion liquid Lq containing the particles is the average particle diameter of the particles of the system of the dispersion liquid Lq containing the particles. For the average value of the entire observed particles, a relational expression of the apparent particle diameter d' depending on the intensity I of the incident light is represented by 1/d' = 1/d₀ + βI/d₀. This relational expression is obtained, and the average particle diameter d₀ of the system at an intensity of the incident light of zero is obtained by extrapolation. β is defined by Expression (14).

By converting d' of the apparent particle size distribution ρ(d') composed of the apparent particle diameters into d₀, an accurate true particle size distribution ρ(d₀) can be obtained.

In addition, in the calculation unit 36, a plurality of particle diameters at a certain ratio in the cumulative distribution of the apparent particle size distribution of the particles are calculated using the particle size distribution composed of the apparent particle diameters, and the relationship between the particle diameter at the certain ratio and the intensity of the incident light is obtained on the assumption that the intensity dependence of the plurality of particle diameters at the certain ratio is linear, so that the true particle size distribution can be obtained. The true particle size distribution is a particle size distribution in a state in which the particle size distribution is not affected by the temperature rise of the particles due to the photothermal conversion, similarly to the true particle diameter. The true particle size distribution does not depend on the intensity of the incident light.

The certain cumulative percentage is a ratio in which 10% of all the particles constituting the particle size distribution are included, a cumulative percentage in which 50% of all the particles constituting the particle size distribution are included, or a cumulative percentage in which 90% of all the particles constituting the particle size distribution are included.

The cumulative percentage in which 10% of all the particles constituting the particle size distribution are included is referred to as D10.

The cumulative percentage in which 50% of all the particles constituting the particle size distribution are included is referred to as D50.

The cumulative percentage in which 90% of tall the particles constituting the particle size distribution are included is referred to as D90.

The particle diameter at the certain ratio in the cumulative distribution is, for example, the particle diameters at D10, D50, and D90 described above.

The particle size distribution is composed of the particle diameters of all the measured particles, and all the particles constituting the particle size distribution are all the particles measured as described above.

Specifically, as shown in FIG. 9, the apparent particle diameter for each intensity of the incident light at D10, D50, and D90 described above is plotted with the reciprocal of the average particle diameter as the vertical axis and the intensity of the incident light as the horizontal axis. In this case, it is assumed that the intensity dependence of the apparent particle diameter is linear. Therefore, an approximate straight line 52 is obtained for the value of the apparent particle diameter at D10 described above. An approximate straight line 54 is obtained for the value of the apparent particle diameter at D50 described above. An approximate straight line 56 is obtained for the value of the apparent particle diameter at D90 described above.

In the approximate straight line 52, the particle diameter at a point P₁₀ extrapolated to the intensity of the incident light of 0 (zero) is the true particle diameter of D10 that does not depend on the intensity of the incident light. In the approximate straight line 54, the particle diameter at a point P₅₀ extrapolated to the intensity of the incident light of 0 (zero) is the true particle diameter at D50 that does not depend on the intensity of the incident light. In the approximate straight line 56, the particle diameter at a point P₅₀ extrapolated to the intensity of the incident light of 0 (zero) is the true particle diameter at D50 that does not depend on the intensity of the incident light. In this way, the true particle diameters that do not depend on the intensity of the incident light are obtained at D10, D50, and D90 described above.

Note that points P₁₀, P₅₀, and P₉₀ shown in FIG. 9 represent the values of 1/particle diameter D10_{R}, 1/particle diameter D50_{R}, and 1/particle diameter D90_{R}, respectively.

In addition, the calculation unit 36 converts the true particle diameters of D10, D50, and D90 described above into an accurate particle size distribution according to the shape of the particle size distribution such as a Gaussian distribution and a Poisson distribution. As a result, the true particle size distribution that does not depend on the intensity of the incident light is obtained.

More specifically, a Gaussian distribution or a Poisson distribution is selected as the shape of the particle size distribution. The values of the true particle diameters of D10, D50, and D90 described above are input to the selected Gaussian distribution or Poisson distribution. The selected Gaussian distribution or Poisson distribution is fitted to match the values of the true particle diameters of D10, D50, and D90 described above. As a result, the particle size distribution is obtained based on the values of the true particle diameters of D10, D50, and D90 described above.

The shape of the particle size distribution such as a Gaussian distribution and a Poisson distribution is stored in, for example, a memory (not shown) of the processing unit 32 as a library, and is called from the library of the memory in a case of obtaining the particle size distribution.

The particle size distribution can be calculated using the following method in addition to the method described above.

First, the intensity dependence of the incident light such as D10 shown in FIG. 9 is obtained for D10, D20, ..., and D90. The true particle diameters D10_{R}, D20_{R}, ..., and D90_{R} for each of D10, D20, ..., and D90 are obtained from the obtained intensity dependence of the incident light of D10, D20, ..., and D90.

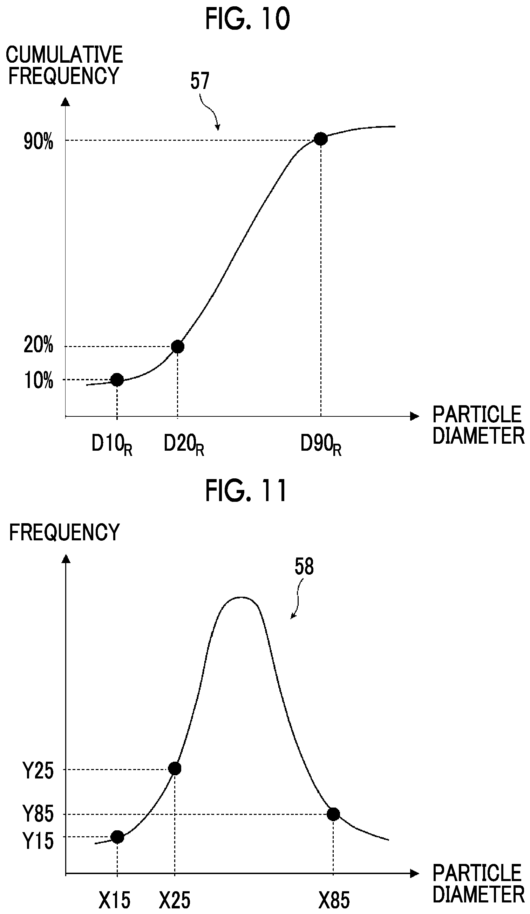

The true particle diameters D10_{R}, D20_{R}, ..., and D90_{R} are obtained by extrapolating the intensity of the incident light to 0 (zero) as described above (see the point P₁₀, the point P₅₀, and the point P₉₀ shown in FIG. 9). By plotting the obtained values of the true particle diameters D10_{R}, D20_{R}, ..., and D90_{R} on a scatter diagram, for example, an cumulative distribution 57 shown in FIG. 10 is obtained.

Next, a value obtained by dividing a cumulative frequency difference between the true particle diameter D20_{R} and the true particle diameter D10_{R} adjacent to each other by a difference between the true particle diameter D20_{R} and the true particle diameter D10_{R} is calculated as Y15 (see Expression (17)). Y25 is calculated in the same manner as Y15 for the true particle diameter D30_{R} and the true particle diameter D20_{R}. Y35 is calculated in the same manner as Y15 for the true particle diameter D40_{R} and the true particle diameter D30_{R}. Hereinafter, the same processing as Y15 is repeated, and Y85 for the true particle diameter D90_{R} and the true particle diameter D80_{R} is calculated (see Expression (17)).

Further, a particle diameter X15 (see Expression (18)) is set to an average value of D20_{R} and D10_{R}, a particle diameter X25 is set to an average value of D30_{R} and D20_{R}, ..., and a particle diameter X85 is set to an average value of D90_{R} and D80_{R}. The above-described particle diameters X15 to X85 are obtained (see Expression (18)).

Finally, by plotting (X15, Y15), (X25, Y25), ..., and (X85, Y85) on a scatter diagram, for example, a particle size distribution 58 shown in FIG. 11 can be obtained. $\begin{matrix}Y 15 = \frac{20 - 10}{D {20}_{R} - D {10}_{R}} \\ Y 25 = \frac{30 - 20}{D {30}_{R} - D {20}_{R}} \\ ⋮ \\ Y 85 = \frac{90 - 80}{D {90}_{R} - D {80}_{R}}\end{matrix}$ (17) $\begin{matrix}X 15 = \frac{D {20}_{R} + D {10}_{R}}{2} \\ X 25 = \frac{D {30}_{R} + D {20}_{R}}{2} \\ ⋮ \\ X 85 = \frac{D {90}_{R} + D {80}_{R}}{2}\end{matrix}$ (18)

In addition, the calculation unit 36 can also obtain the second temperature after the temperature of the particles at the first temperature is increased due to the light absorption of the incident light, and can obtain the true particle diameter of the particles from the diffusion coefficient after the temperature is increased by using an expression representing the diffusion coefficient in a case where the temperature is increased.

Here, the first temperature is a temperature before the temperature rises due to the light absorption. For example, in a case in which the particles are dispersed in the dispersion liquid Lq, the first temperature is a temperature of the dispersion liquid Lq before the light absorption.

Specifically, for the second temperature after the temperature is increased due to the light absorption of the incident light, first, ΔT is calculated from the experimental results by using Expression (13) using the apparent particle diameter d' obtained at a certain intensity of the incident light and the true particle diameter d₀ obtained by extrapolating the intensity of the incident light to 0 (zero). As a result, the second temperature T' is obtained by T + ΔT.

In this case, as described above, in a case in which the particle diameter d' and the particle diameter d₀ at any intensity I of the incident light are known, since the constant E/R related to the viscosity of the solvent and the temperature T₀ are known, the temperature rise ΔT at each intensity of the incident light is obtained. As a result, the intensity I of the incident light and the proportional coefficient α of the temperature rise ΔT in the expression (6) can be obtained, and the true temperature T' = T₀ + ΔT during the measurement is obtained. The temperature T₀ is the first temperature, and the temperature T' is the second temperature. The expression representing the diffusion coefficient in a case in which the temperature rise occurs is the expression (2). In this case, the true particle diameter of the particles can be obtained from the diffusion coefficient after the temperature is increased.

Since the calculation unit 36 obtains the true particle diameter for all the measured particles, the particle size distribution of the particles can be obtained.

Then, for the obtained particle size distribution A(d), the calculation unit 36 uses the expression expressed by d₀ = (1 + β)·I·d, similar to the expression (16), and the intensity of the incident light is set as I in the expression expressed by d₀ = (1 + β)·I·d, and the obtained particle size distribution A(d) is corrected to A(d₀). As a result, the particle size distribution A(d₀) in which the dependence on the intensity of the incident light is taken into account is obtained.

In addition, the calculation unit 36 can also obtain the second temperature after the temperature of the particles at the first temperature is increased by the light absorption of the incident light, and obtain the particle size distribution of the particles.

In this case, the particle size distribution is obtained as described above. In this case, in a case of obtaining the particle diameter from the diffusion coefficient D, as illustrated in the expression (2), the temperature T', that is, the second temperature and the viscosity η' of the solvent at the temperature T' are used. As a result, the particle size distribution A(d₀) in which the influence of the incident light is taken into account is obtained.

The processing unit 32 executes a program (computer software) stored in a read only memory (ROM) or the like to obtain the particle size distribution of the particles as described above. The processing unit 32 may be configured by a computer in which each section functions by executing the program as described above, may be a dedicated device in which each section is configured by a dedicated circuit, or may be configured by a server to be executed on the cloud.

In the optical measurement device 20, the storage unit 23 is not limited to a configuration using the transparent substrate 24 and the trapezoidal prism 25a. The storage unit 23 may have a configuration including a flow path (not shown) in which the dispersion liquid Lq is stored. In this case, a lens such as the objective lens 26 is provided between the flow path and the image acquisition unit 30, the dispersion liquid Lq is stored in the flow path, and the incident light Li is incident on the dispersion liquid Lq in the flow path from the light source 22. The scattered light generated by the incidence of the incident light Li is collected by the lens such as the objective lens 26, and the image sensor 31 of the image acquisition unit 30 acquires the image of the particles.

The flow path is transparent and transmits the scattered light Ls generated by the incident light Li incident on the dispersion liquid Lq. In addition, for example, the flow path is made of optical glass or optical plastic, and has a width of about several µm to several mm and a thickness of about several µm to several 100 µm.

### (Second Example of Optical Measurement Device)

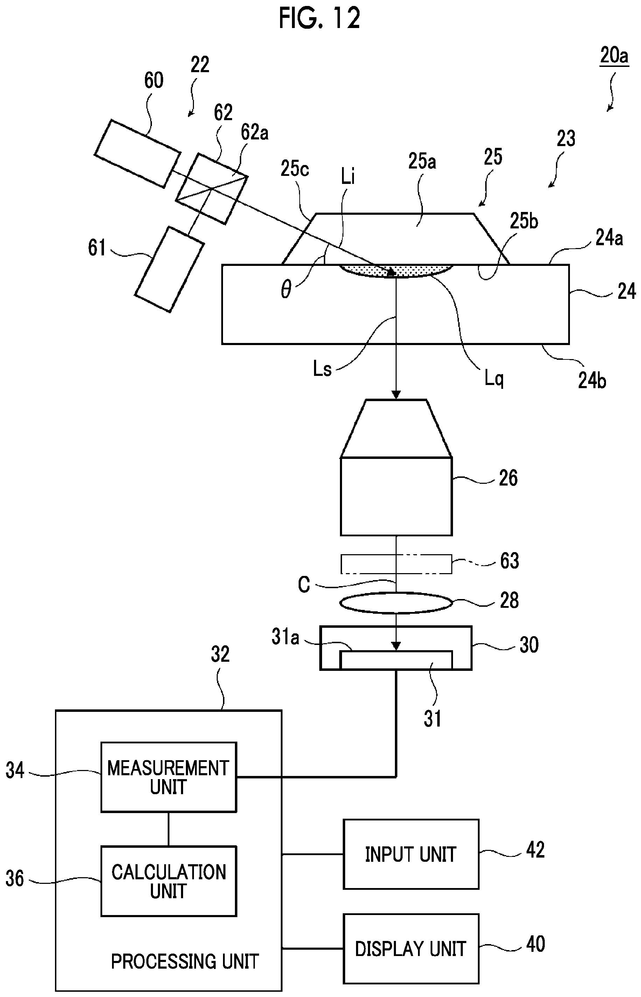

The optical measurement device 20 is not limited to the configuration illustrated in FIG. 5, and an optical measurement device 20a illustrated in FIG. 12 may be used.

FIG. 12 is a schematic view illustrating a first example of the optical measurement device according to the embodiment of the present invention. In FIG. 12, the same components as those of the optical measurement device 20 illustrated in FIG. 5 are designated by the same reference numerals, and detailed description thereof will be omitted.

The optical measurement device 20a shown in FIG. 12 has the same configuration as the optical measurement device 20 except that the configuration of the light source 22 is different from that of the optical measurement device 20 shown in FIG. 5.

The light source 22 includes a first laser 60 that emits first laser light L₁ having a wavelength in a light absorption wavelength range of the particles of the dispersion liquid Lq, and a second laser 61 that emits second laser light L₂ having a wavelength other than the light absorption wavelength range of the particles of the dispersion liquid Lq.

The light source 22 emits the incident light Li including the first laser light L₁ having a wavelength in the light absorption wavelength range of the particles and the second laser light L₂ having a wavelength other than the light absorption wavelength range of the particles.

The optical measurement device 20a is provided with, for example, a cubic beam splitter 62. The beam splitter 62 has a transmission/reflection surface 62a that multiplexes two beams of the incident light. The transmission/reflection surface 62a is a diagonal surface of the beam splitter 62 and is an inclined surface having an angle of 45°.

The first laser 60 and the second laser 61 are disposed such that the first laser light L₁ and the second laser light L₂ are incident on a predetermined position of the transmission/reflection surface 62a of the beam splitter 62. As a result, the first laser light L₁ and the second laser light L₂ are multiplexed to obtain the incident light Li.

By adjusting the orientation of the transmission/reflection surface 62a, the orientation of the incident light Li is adjusted, and the incident light Li is incident on the dispersion liquid Lq.

In the incident light Li, the second laser light L₂ is light having a wavelength other than the light absorption wavelength range of the particles, and thus is used to mainly obtain scattered light or the like of the particles and to acquire the image of the particles.

The first laser light L₁ is light having a wavelength in the light absorption wavelength range of the particles, and thus is mainly used to adjust the intensity of the incident light.

The light source 22 changes the intensity of the incident light Li by changing the intensity of the first laser light L₁. That is, the intensity of the incident light Li is changed by changing the intensity of the light emitted from the first laser 60.

As described above, by using the first laser light L₁ and the second laser light L₂, in the optical measurement device 20a, the incident light Li is incident from the inclined surface 25c of the trapezoidal prism 25a, and the incident light Li is incident on the dispersion liquid Lq at a preset angle θ to cause the particles to absorb the incident light Li. The second laser light L₂ having a wavelength that is not absorbed by the particles generates scattered light Ls scattered at an angle different from the incident light Li, and the scattered light Ls is collected by the objective lens 26 and imaged on the image sensor 31 by the image forming lens 28. As a result, in the image sensor 31, the data of the dark-field image of the particles is obtained as the data of the image of the particles. The data of the image of the particles is acquired continuously in time. The plurality of pieces of data of the images of the particles acquired continuously in time are output to the measurement unit 34. The data of the image of the particles output to the measurement unit 34 is data of the dark-field image.

In the optical measurement device 20a, as described above, the optical axis C is orthogonal to the front surface 24a of the transparent substrate 24, and the incident light Li is obliquely incident on the front surface 24a of the transparent substrate 24 at the angle θ. Therefore, the incident light Li is not directly incident on the objective lens 26. From this, in a case where the scattered light Ls is not generated, the incident light Li is not directly incident on the objective lens 26, and thus a dark image is obtained. On the other hand, in a case where the scattered light Ls is generated, an image based on the scattered light Ls, that is, an image of the particles is obtained.

In addition, in the optical measurement device 20a, the first laser 60 that emits the first laser light L₁ having a wavelength in the light absorption wavelength range of the particles of the dispersion liquid Lq and the second laser 61 that emits the second laser light L₂ having a wavelength other than the light absorption wavelength range of the particles of the dispersion liquid Lq are provided. Therefore, by changing the wavelength of the first laser light L₁ emitted by the first laser 60, the true particle diameter and the true particle size distribution can be obtained for a plurality of types of particles having different light absorption wavelength ranges.

The light absorption wavelength range of the particles can be specified by measuring an absorption spectrum using a spectrophotometer.

In the optical measurement device 20a, it is preferable that a filter 63 that attenuates light having a wavelength in the light absorption wavelength range of the particles is provided between the dispersion liquid Lq and the image acquisition unit 30.

More specifically, it is preferable that the filter 63 is disposed between the objective lens 26 and the image forming lens 28. By providing the filter 63, the light that carries the image of the particles incident on the image sensor 31 of the image acquisition unit 30 is suppressed from including light having a wavelength in the light absorption wavelength range of the particles. As a result, in the image of the particles, the influence of the first laser light L₁ having a wavelength in the light absorption wavelength range of the particles can be reduced.

The filter 63 is not particularly limited as long as the filter 63 can attenuate light having a wavelength in the light absorption wavelength range of the particles. As the filter 63, for example, a filter that absorbs light in the light absorption wavelength range of the particles or a band-pass filter that blocks light in the light absorption wavelength range of the particles can be used.

### (Third Example of Optical Measurement Device)

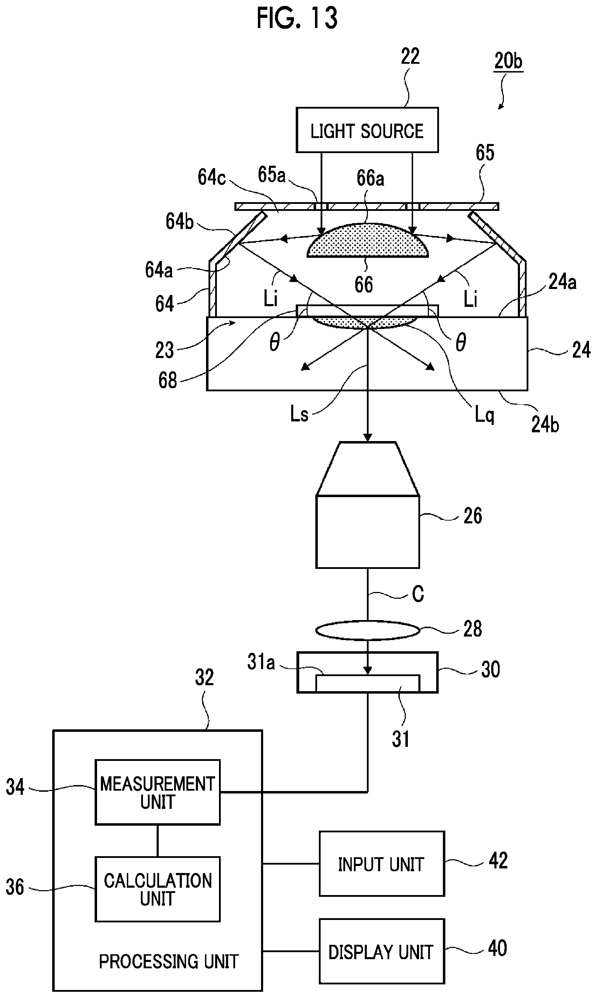

FIG. 13 is a schematic view illustrating a second example of the optical measurement device according to the embodiment of the present invention. In FIG. 13, the same components as those of the optical measurement device 20 illustrated in FIG. 5 are designated by the same reference numerals, and detailed description thereof will be omitted.

An optical measurement device 20b shown in FIG. 13 has the same configuration as the optical measurement device 20 except that the optical measurement device 20b is in dark-field illumination and a cover plate 68 is provided instead of the optical element 25 as compared with the optical measurement device 20 shown in FIG. 5. The light source 22 of the optical measurement device 20b can change the intensity of the incident light Li and emits laser light including light having a wavelength in the light absorption wavelength range of the particles, as in the optical measurement device 20.

The cover plate 68 is transparent to the incident light Li and is made of, for example, optical glass or optical plastic.

In the optical measurement device 20b, a reflective member 64 is provided on the surface 24a of the transparent substrate 24. The reflective member 64 has a shape in which the surface 24a side of the transparent substrate 24 is a cylinder and a frustum is connected to the cylinder in a continuous manner.

The reflective member 64 has a bending portion 64b bent with respect to the surface 24a of the transparent substrate 24, and an inner surface 64a of the reflective member 64 is a reflecting surface. In addition, the reflective member 64 has an opening portion 64c facing the surface 24a. An annular band mask 65 is provided in the opening portion 64c, and the opening portion 64c is closed by the annular band mask 65. An annular slit 65a is provided in the annular band mask 65. The annular slit 65a is provided at a position facing the opening portion 64c.

A reflective portion 66 having a curved surface 66a that is convex with respect to the surface 24a of the transparent substrate 24 is provided between the slit 65a of the annular band mask 65 and the dispersion liquid Lq on the surface 24a of the transparent substrate 24, and inside the reflective member 64.

The light emitted from the light source 22 is transmitted through the slit 65a of the annular band mask 65 to form annular light. The annular light is reflected by the curved surface 66a of the reflective portion 66 toward the inner surface 64a of the bending portion 64b of the reflective member 64. Further, the annular light is reflected by the inner surface 64a of the bending portion 64b of the reflective member 64 and is incident on the dispersion liquid Lq as incident light Li at a preset angle θ with respect to the surface 24a of the transparent substrate 24. As a result, scattered light Ls scattered at an angle different from the incident light Li is generated in the dispersion liquid Lq. The scattered light Ls is collected by the objective lens 26 and is imaged on the image sensor 31 by the image forming lens 28. As a result, in the image sensor 31, the data of the dark-field image of the particles is obtained as the data of the image of the particles. The data of the image of the particles is acquired continuously in time. The plurality of pieces of data of the images of the particles acquired continuously in time are output to the measurement unit 34. The data of the image of the particles output to the measurement unit 34 is data of the dark-field image.

In the optical measurement device 20b, as described above, the optical axis C is orthogonal to the surface 24a of the transparent substrate 24, and the incident light Li is obliquely incident on the surface 24a of the transparent substrate 24 at the angle θ. Therefore, the incident light Li is not directly incident on the objective lens 26. Therefore, in a case where the scattered light is not generated, the incident light Li is not directly incident on the objective lens 26, and thus a dark image is obtained. On the other hand, in a case where the scattered light is generated, an image based on the scattered light, that is, an image of the particles is obtained. Therefore, even in a case where the particle diameter is small, a clear image of the particles can be obtained.

### (First Example of Optical Measurement Method)

The optical measurement is performed based on the above-described measurement principle. For the optical measurement, for example, the optical measurement device 20 shown in FIG. 5 is used.

The optical measurement device 20a shown in FIG. 12 and the optical measurement device 20b shown in FIG. 13 can obtain the particle diameter, the diffusion coefficient, and the particle size distribution in the same manner as the optical measurement device 20 shown in FIG. 5, except that the method of acquiring the image of the particles is different.
A first example of the optical measurement method is an optical measurement method for the dispersion liquid containing the particles.

In the first example of the optical measurement method, first, a plurality of images of the particles obtained by causing the incident light Li to be incident on the dispersion liquid Lq with a changed intensity are acquired continuously in time for each intensity of the incident light (acquisition step).

In the acquisition step, the dispersion liquid Lq containing the particles is measured by using, for example, a laser that emits light having a wavelength in a light absorption wavelength range of the particles, as the light source 22 shown in FIG. 5.

The light is emitted from the light source 22, and for example, the incident light Li is incident on the dispersion liquid Lq at a preset angle θ through the inclined surface 25c of the trapezoidal prism 25a, and the particles of the dispersion liquid Lq absorb the incident light Li. In this case, scattered light Ls scattered at an angle different from the incident light Li is generated.

The scattered light Ls in which the incident light Li is scattered by the particles is collected by the objective lens 26, is incident on the image forming lens 28, and is formed on the image sensor 31. As a result, in the image sensor 31, the data of the dark-field image of the particles is obtained as the data of the image of the particles. For example, by acquiring the image of the particles as a video having a preset frame rate, a plurality of pieces of data of the image of the particles are acquired continuously in time. In this case, for example, the first image 44a and the second image 44b shown in FIG. 6 are acquired.

In the acquisition step, a plurality of pieces of data of the image of the particles are acquired continuously in time for each intensity of the incident light.

Next, the moving average distance of the particles is measured for each intensity of the incident light from the plurality of images acquired continuously in time for each intensity of the incident light obtained in the acquisition step (measurement step).

In the measurement step, for example, the centroid position is obtained as the positions of the first particle 45a, the second particle 45b, and the third particle 45c in the first image 44a and the second image 44b shown in FIG. 6. The centroid position is obtained by obtaining the geometric center position of the region surrounded by the contour of the extracted particles in the first image 44a and the second image 44b as described above.

Next, a movement trajectory (not shown) of each of the first particle 45a, the second particle 45b, and the third particle 45c is calculated from the positions of the first particle 45a, the second particle 45b, and the third particle 45c in the first image 44a and the second image 44b. The movement amount of the particles per unit imaging time interval, that is, the moving distance of the particles is obtained from the movement trajectory of the particles. The movement amount of all the measured particles is obtained, and the moving average distance Sp described above is obtained for all the measured particles.

Next, the apparent particle diameter of the particles is calculated for each intensity of the incident light from the moving average distance of the particles for each intensity of the incident light obtained in the measurement step, and the true particle diameter of the particles is obtained from the apparent particle diameter of the particles for each intensity of the incident light (calculation step).

In the calculation step, the apparent particle diameter of all the measured particles is calculated for each intensity of the incident light Li from Expression (A) described above using the moving average distance Sp described above for each intensity of the incident light Li of each particle.

Next, it is assumed that the intensity dependence of the apparent particle diameter of the particles is linear, a relationship between the apparent particle diameter of the particles and the intensity of the incident light is obtained, and the true particle diameter of the particles is obtained. Regarding this, the relational expression of the apparent particle diameter d' depending on the intensity I of the incident light is represented by 1/d' = 1/d₀ + βI/d₀ as described above. This relational expression is obtained, and the average particle diameter d₀ of the system at an intensity of the incident light of zero is obtained by extrapolation. β is defined by Expression (14).

For example, as shown in FIG. 8, an approximate straight line 50 representing a relationship between the apparent average particle diameter and the intensity of the incident light is obtained. The particle diameter at the intensity of the incident light of zero in the approximate straight line 50 is obtained as the true particle diameter that is not affected by the temperature rise of the particles due to the photothermal conversion. In this way, even in a case of the particles having the property of absorbing light, the true particle diameter of the particles can be obtained.

In the calculation step, since the true particle diameter of all the measured particles is calculated, the true particle size distribution can also be obtained from the true particle diameters of all the calculated particles.

In addition, even in a case where the particles absorb light and the temperature rises, the true particle diameter can be obtained as follows.

In this case, the second temperature after the temperature of the particles at the first temperature rises due to the light absorption of the incident light is obtained. Next, the true particle diameter of the particles is obtained from the diffusion coefficient after the temperature rise by using an expression representing the diffusion coefficient in a case of the temperature rise.

The first temperature is as described above. Regarding the second temperature after the temperature rise due to the light absorption of the incident light, first, ΔT is calculated from the experimental results using Expression (13) by using the apparent particle diameter d' obtained at a certain intensity of the incident light and the true particle diameter d₀ obtained by extrapolating the intensity of the incident light to 0 (zero). As a result, the second temperature T' is obtained by T + ΔT. In a case where the second temperature T' can be obtained, the diffusion coefficient after the temperature rise, that is, the diffusion coefficient at the second temperature is obtained by using Expression (2) representing the diffusion coefficient in a case where the temperature rise occurs as described above. The true particle diameter d₀ is obtained by using the diffusion coefficient after the temperature rise.

D' is the diffusion coefficient after the temperature rise, and in this case, is the diffusion coefficient at the second temperature. As described above, T' is the temperature after the temperature rise, and in this case, is the second temperature. η' is the viscosity of the solvent at the temperature T', and in this case, is the viscosity at the second temperature.

In the acquisition step, the data of the images of the particles is temporally continuously acquired a plurality of times for each intensity of the incident light, and the true particle diameter of the particles is obtained in the calculation step which is the next step. However, in the acquisition step, the calculation step may be performed after the data of the images of the particles is acquired continuously in time for all intensities of the incident light to be measured, that is, after the data of the images of the particles is acquired for all intensities of the incident light to be measured.

In addition, in the acquisition step, the calculation step may be performed temporally continuously after the data of the images of the particles is acquired continuously in time for each intensity of the incident light to be measured.

### (Second Example of Optical Measurement Method)

The obtaining of the true particle diameter has been described above, but the true particle size distribution of the particles can also be obtained.

The second example of the optical measurement method is a method of obtaining the true particle size distribution of the particles.

The method of obtaining the true particle size distribution of the second example of the optical measurement method is different from the method of obtaining the true particle diameter of the first example of the optical measurement method in that the acquisition step and the measurement step are the same steps, and the calculation step is a step of obtaining the true particle size distribution. Therefore, the calculation step of obtaining the true particle size distribution will be described.

In the second example of the optical measurement method, the calculation step of obtaining the true particle size distribution is a step of calculating the apparent particle size distribution for each intensity of the incident light from the moving average distance of the particles for each intensity of the incident light obtained in the measurement step, and obtaining the true particle size distribution from the apparent particle size distribution for each intensity of the incident light.

In the calculation step, the apparent particle diameter is calculated for all the measured particles for each intensity of the incident light Li from the above-described Expression (A) using the moving average distance Sp of each particle for each intensity of the incident light Li as described above. As a result, the apparent particle diameter is obtained for all the measured particles for each intensity of the incident light Li. From this, the apparent particle size distribution is obtained for all the measured particles for each intensity of the incident light Li.

As described above, it is assumed that the apparent particle diameter of the particles has a linear dependence on the intensity of incident light, the relationship between the apparent particle diameter of the particles and the intensity of the incident light is obtained. The true particle diameter is calculated for all the measured particles using the relationship between the apparent particle diameter of the particles and the intensity of the incident light. The true particle size distribution is obtained from the calculated true particle diameters of all the particles.

In addition, even in the particle size distribution, even in a case where the particles absorb light and the temperature rises as described above, the true particle diameter can be obtained as described above. From this, the true particle size distribution can be obtained using the true particle diameter of the particles obtained from the diffusion coefficient after the temperature rise.

In addition, the calculation step includes calculating a plurality of particle diameters at a certain ratio in a cumulative distribution of the apparent particle size distribution of the particles, obtaining a relationship between the particle diameters at the certain cumulative percentage and the intensity of the incident ligh, and obtaining a true particle size distribution, assuming that an intensity dependence of the plurality of particle diameters at the certain cumulative percentage on the intensity of the incident light is linear. The certain ratio is as described above.

In this case, as described above, it is assumed that the intensity dependence of the apparent particle diameter of the incident light at D10, D50, and D90 of each intensity of the incident light is linear. As shown in FIG. 9, the relationship between the apparent particle diameter of the incident light at D10, D50, and D90 of each intensity of the incident light and the intensity of the incident light is obtained, and the true particle diameters at D10, D50, and D90 in a case where the intensity of the incident light is zero are obtained.

As described above, the true particle diameters of D10, D50, and D90 are used to convert the particle size distribution into an accurate particle size distribution according to the shape of the particle size distribution such as a Gaussian distribution and a Poisson distribution. As a result, the true particle size distribution that does not depend on the intensity of the incident light can be obtained.

### (Third Example of Optical Measurement Method)

A third example of the optical measurement method is a method of obtaining the true particle diameter of the particles.

In the method of obtaining the true particle diameter of the third example of the optical measurement method, the acquisition step and the measurement step are the same steps as those in the method of obtaining the true particle diameter of the first example of the optical measurement method described above, and the calculation step of obtaining the true particle diameter is different. Therefore, the calculation step of obtaining the true particle diameter will be described.

In the third example of the optical measurement method, the calculation step is a step of calculating the diffusion coefficient for each intensity of the incident light from the moving average distance of the particles for each intensity of the incident light obtained by the measurement step, obtaining the diffusion coefficient in a case where the intensity of the incident light is zero from the diffusion coefficient for each intensity of the incident light, and obtaining the true particle diameter of the particles from the diffusion coefficient in a case where the intensity of the incident light is zero.

Here, the following Expression (19) is obtained from Expression (A) and Expression (1) described above, and the diffusion coefficient D is represented by the following Expression (20) from Expression (19). In addition, Expression (1) related to the diffusion coefficient D is also shown in Expression (20). The following Expression (21) related to the particle diameter d₀ is obtained from Expression (20). In Expression (21), D₀ is the diffusion coefficient in a case where the intensity of the incident light is zero, that is, the true diffusion coefficient. The true particle diameter d₀ of the particles can be obtained from the true diffusion coefficient D₀ by Expression (21).

From this, the diffusion coefficient D can be calculated for each intensity of the incident light by obtaining the moving average distance Sp of the particles.

Regarding the diffusion coefficient, as in the apparent particle diameter, it is assumed that the diffusion coefficient has a linear dependence on the intensity of incident light, as shown in FIGS. 1 and 3. As a result, the diffusion coefficient in a case where the intensity of the incident light is zero can be obtained.

The true particle diameter d₀ can be obtained from Expression (21) using the diffusion coefficient D₀ in a case where the intensity of the incident light is zero. As a result, the true particle diameter can be obtained for the measured particles of the dispersion liquid Lq. The true particle size distribution can be obtained from the true particle diameters of all the calculated particles.$\overline{{x}^{2}} \left(=Sp\right) = 2 D Δt$ (19) $D = \frac{\overline{{x}^{2}}}{2 Δ t} = \frac{{k}_{B} {T}_{0}}{3 {πη}_{0} d}$ (20) ${d}_{0} = \frac{{k}_{B} {T}_{0}}{3 {πη}_{0} {D}_{0}}$ (21)

In the above description, the acquisition of the image of the particle from the scattered light has been described, but the present invention is not limited thereto. In a case where the property of the particle is, for example, luminescence, fluorescence is generated by the incident light. The image of the particle is acquired from the fluorescence. Even in a case of fluorescence, a method of obtaining the position of the particle from the image of the particle and a calculation method of calculating the true particle diameter and the true particle size distribution are the same as the method of obtaining the position of the particle in the image of the particle acquired from the scattered light and the calculation method of calculating the true particle diameter and the true particle size distribution in the image of the particle. Therefore, the detailed description thereof will be omitted.

The present invention is basically configured as described above. Although the optical measurement method and the optical measurement device according to the embodiment of the present invention have been described in detail above, the present invention is not limited to the above-described embodiment, and various improvements or modifications may be made without departing from the gist of the present invention.

### Explanation of References

10, 13, 14, 15, 16, 17, 18: straight line
20, 20a, 20b: optical measurement device
22: light source
23: storage unit
24: transparent substrate
24a: surface
24b: back surface
25: optical element
25a: trapezoidal prism
25b: lower base
25c: inclined surface
26: objective lens
28: image forming lens
30: image acquisition unit
31: image sensor
31a: light-receiving surface
32: processing unit
34: measurement unit
36: calculation unit
40: display unit
42: input unit
44a: first image
44b: second image
45a: first particle
45b: second particle
45c: third particle
46: image
46a: movement trajectory
46b: movement distance
50, 52, 54, 56: approximate straight line
57: cumulative distribution
58: particle size distribution
60: first laser
61: second laser
62: beam splitter
62a: transmission/reflection surface
63: filter
64: reflective member
64a: inner surface
64b: bending portion
64c: opening portion
65: annular band mask
65a: slit
66: reflective portion
66a: curved surface
68: cover plate
C: optical axis
L₁: first laser light
L₂: second laser light
Li: incident light
Lq: dispersion liquid
Ls: scattered light
θ: angle

## Claims

1. An optical measurement method of a dispersion liquid containing particles, the method comprising:
an acquisition step of acquiring a plurality of images of the particles obtained by causing incident light to be incident on the dispersion liquid with a changed intensity, continuously in time for each intensity of the incident light;
a measurement step of measuring a moving average distance of the particles for each intensity of the incident light, from the plurality of images acquired continuously in time for each intensity of the incident light, the plurality of images being obtained in the acquisition step; and
a calculation step of calculating an apparent particle diameter of the particles for each intensity of the incident light, from the moving average distance of the particles for each intensity of the incident light obtained in the measurement step, to obtain a true particle diameter of the particles from the apparent particle diameter of the particles for each intensity of the incident light.

2. An optical measurement method of a dispersion liquid containing particles, the method comprising:
an acquisition step of acquiring a plurality of images of the particles obtained by causing incident light to be incident on the dispersion liquid with a changed intensity, continuously in time for each intensity of the incident light;
a measurement step of measuring a moving average distance of the particles for each intensity of the incident light from the plurality of images acquired continuously in time for each intensity of the incident light obtained by the acquisition step; and
a calculation step of calculating an apparent particle size distribution for each intensity of the incident light from the moving average distance of the particles for each intensity of the incident light obtained by the measurement step, to obtain a true particle size distribution from the apparent particle size distribution for each intensity of the incident light.

3. An optical measurement method of a dispersion liquid containing particles, the method comprising:
an acquisition step of acquiring a plurality of images of the particles obtained by causing incident light to be incident on the dispersion liquid with a changed intensity, continuously in time for each intensity of the incident light for each intensity of the incident light;
a measurement step of measuring a moving average distance of the particles for each intensity of the incident light, from the plurality of images acquired continuously in time for each intensity of the incident light the plurality of images being obtained in the acquisition step; and
a calculation step of calculating a diffusion coefficient for each intensity of the incident light from the moving average distance of the particles for each intensity of the incident light, obtained in the measurement step, to obtain a diffusion coefficient at a zero intensity of the incident light from the diffusion coefficient for each intensity of the incident light, and to obtain a true particle diameter of the particles from the diffusion coefficient at the zero intensity of the incident light.

4. The optical measurement method according to claim 1 or 2, wherein the calculation step includes, obtaining a relationship between the apparent particle diameter of the particles and the intensity of the incident light, and obtaining the true particle diameter of the particle, assuming that an intensity dependence of the apparent particle diameter of the particles on the intensity of the incident light is linear.

5. The optical measurement method according to claim 3, wherein the calculation step includes, obtaining a relationship between the diffusion coefficient of the particles and the intensity of the incident light, and obtaining a diffusion coefficient at a zero intensity of the incident light, assuming that an intensity dependence of a diffusion coefficient of the particles on the intensity of the incident light is linear.

6. The optical measurement method according to claim 2, wherein the calculation step includes calculating a plurality of particle diameters at a certain ratio in a cumulative distribution of the apparent particle size distribution of the particles, obtaining a relationship between the particle diameters at the certain cumulative percentage and the intensity of the incident ligh, and obtaining a true particle size distribution, assuming that an intensity dependence of the plurality of particle diameters at the certain cumulative percentage on the intensity of the incident light is linear.

7. The optical measurement method according to claim 6, wherein the certain ratio is a ratio including 10% of all particles constituting the particle size distribution, a ratio including 50% of all particles constituting the particle size distribution, or a ratio including 90% of all particles constituting the particle size distribution.

8. The optical measurement method according to claim 4, further comprising:
a step of obtaining a second temperature after a temperature rise of the particles at a first temperature due to light absorption of the incident light; and a step of obtaining the true particle diameter of the particles from a diffusion coefficient after the temperature rise using an expression representing a diffusion coefficient in a case where the temperature rises.

9. An optical measurement device for a dispersion liquid containing particles, the optical measurement device comprising:
a light source that causes incident light to be incident on the dispersion liquid with a changed intensity;
an image acquisition unit that acquires a plurality of images of the particles obtained by causing the incident light to be incident on the dispersion liquid with the changed intensity, continuously in time for each intensity of the incident light;
a measurement unit that measures a moving average distance of the particles for each intensity of the incident light from the plurality of images acquired continuously in time for each intensity of the incident light obtained by the image acquisition unit; and
a calculation unit that calculates an apparent particle diameter of the particles for each intensity of the incident light from the moving average distance of the particles for each intensity of the incident light obtained by the measurement unit, and obtains a true particle diameter of the particles from the apparent particle diameter of the particles for each intensity of the incident light.

10. An optical measurement device for a dispersion liquid containing particles, the optical measurement device comprising:
a light source that causes incident light to be incident into the dispersion liquid with a changed intensity;
an image acquisition unit that acquires a plurality of images of the particles obtained by causing the incident light to be incident on the dispersion liquid with the changed intensity, continuously in time for each intensity of the incident light;
a measurement unit that measures a moving average distance of the particles for each intensity of the incident light from the plurality of images that are temporally continuously acquired for each intensity of the incident light obtained by the image acquisition unit; and
a calculation unit that calculates an apparent particle size distribution for each intensity of the incident light from the moving average distance of the particles for each intensity of the incident light obtained by the measurement unit, and obtains a true particle size distribution from the apparent particle size distribution for each intensity of the incident light.

11. An optical measurement device for a dispersion liquid containing particles, the device comprising:
a light source that causes incident light to be incident into the dispersion liquid with a changed intensity;
an image acquisition unit that acquires a plurality of images of the particles obtained by causing the incident light to be incident on the dispersion liquid with the changed intensity, continuously in time for each intensity of the incident light;
a measurement unit that measures a moving average distance of the particles for each intensity of the incident light from the plurality of images acquired continuously in time for each intensity of the incident light obtained by the image acquisition unit; and
a calculation unit that calculates a diffusion coefficient for each intensity of the incident light from the moving average distance of the particles for each intensity of the incident light obtained by the measurement unit, obtains a diffusion coefficient at a zero intensity of the incident light from the diffusion coefficient for each intensity of the incident light, and obtains a true particle diameter of the particles from the diffusion coefficient at the zero intensity of the incident light.

12. The optical measurement device according to claim 9 or 10, wherein the calculation unit obtains a relationship between the apparent particle diameter of the particles and the intensity of the incident light, and obtains the true particle diameter of the particles, assuming that intensity dependence of the apparent particle diameter of the particles on the incident light is linear.

13. The optical measurement device according to claim 11, wherein the calculation unit obtains a relationship between the diffusion coefficient of the particles and the intensity of the incident light, and obtains the diffusion coefficient at the zero intensity of the incident light, assuming that intensity dependence of the diffusion coefficient of the particles on the incident light is linear.

14. The optical measurement device according to claim 10, wherein the calculation unit calculates a plurality of particle diameters at a certain cumulative distribution in an integrated distribution of the apparent particle size distribution of the particles, obtains a relationship between the particle diameters at the certain cumulative percentage and the intensity of the incident light, and obtains a true particle size distribution, assuming that intensity dependence of the plurality of particle diameters at the certain cumulative percentage on the incident light is linear.

15. The optical measurement device according to claim 14, wherein the certain ratio is a cumulative percentage including 10% of all particles constituting the particle size distribution, a cumulative percentage including 50% of all particles constituting the particle size distribution, or a cumulative percentage including 90% of all particles constituting the particle size distribution.

16. The optical measurement device according to claim 12, wherein the calculation unit obtains a second temperature after a temperature rise of the particles at a first temperature due to light absorption of the incident light, and obtains the true particle diameter of the particles from the diffusion coefficient after the temperature rise using an expression representing a diffusion coefficient in a case where the temperature rises.

17. The optical measurement device according to any one of claims 9 to 11,
wherein the light source emits the incident light including first laser light having a wavelength in a light absorption wavelength range of the particles and second laser light having a wavelength other than the light absorption wavelength range of the particles, and the light source changes the intensity of the incident light by changing an intensity of the first laser light.

18. The optical measurement device according to claim 17, further comprising: a filter that attenuates light having a wavelength in the light absorption wavelength range of the particles, the filter being disposed between the dispersion liquid and the image acquisition unit.

19. The optical measurement device according to any one of claims 9 to 11, further comprising:
a storage unit in which the dispersion liquid is stored,
wherein the storage unit has an optical element and a transparent substrate, and the dispersion liquid is stored between the optical element and the transparent substrate, and the optical element is a trapezoidal prism, a semicylindrical prism, or a semicircular prism.

20. The optical measurement device according to any one of claims 9 to 11, further comprising:
a storage unit that has a flow path in which the dispersion liquid is stored; and
a lens that is provided between the flow path and the image acquisition unit, wherein the dispersion liquid is stored in the flow path, and the incident light is incident on the dispersion liquid in the flow path from the light source.
